# EUROPEAN PATENT APPLICATION

(11) **EP 1 400 196 A2**
(43) Date of publication of application: **24.03.2004**
(21) Application number: 03255853.8
(22) Date of filing: 18.09.2003
(51) Int. Cl.: A47J 42/16

(54) **Manual grinder for peppercorns, salt crystals and other grindable products**

(30) Priority: 18.09.2002 IT MI20021984
(71) Applicant: Click Clack Limited, Palmerston North 5301 (NZ)
(72) Inventor: Arduini, Giovanni, 20134 Milan (IT)
(74) Representative: Hitchcock, Esmond Antony

(57) **Abstract**

An easy-to-use manual grinder for peppercorns, salt crystals and other grindable products. The manual grinder comprises a container (12) with a shaft (14) passing therethrough. The shaft (14) is connected to conical round type grinder plates (16) at the base (20) of the grinder (10). At its upper end the shaft (14) is coupled to a toothed wheel (18), which meshes with a rack (22) the rack being able to slide in an essentially perpendicular direction to the axis of the shaft (14). The rack is moved by a lever 42 pivotally connected (44) to the container (12).

## Description

The invention relates to an easy-to-use manual grinder for peppercorns, salt crystals and other edible grindable products.

Manual and electric grinders for crushing peppercorns, salt crystals, coffee beans and other grindable products of an edible nature to a ground form are known in the household sector. The best known prior art type is a manually operated grinder, essentially cylindrical in shape, into which the grindable product is poured.

The lower part of such a grinder has conical round grinder plates, moved by means of an axial shaft which is rotated, generally from the top end, by the user's hand. The user holds the grinder over the area of use with his or her other hand. However, in certain situations this known type of grinder can be inconvenient to use, primarily because the correct, and often the only, form of use requires the use of both hands.

For example if someone wishes to add salt or pepper to food cooking on a barbecue, the person cooking the food will already have in his/her hand a fork or other utensil for turning the food over the heat. To use the grinder, however, the user has to put down the fork.

The problems associated with using this known type of grinder pose difficulties for people who are disabled or injured in one hand.

A further problem with most grinders of this type is that the operating mechanism permits one grinder plate to be rotated relative to the other in both directions i.e. both clockwise and anticlockwise. However, only one of these directions achieves a correct milling action. When the rotation occurs in the opposite i.e. incorrect direction, damage can occur to the grinding plates. Also the product to be ground tends to be forced out of the grinding area and back into the product within the grinder thus correct milling is not achieve.

The object of the invention is therefore to overcome the above problems, and in particular to provide an easy-to-use manual grinder for peppercorns, salt crystals and other grindable products which can be operated correctly and using only one hand.

A further object of the invention is to provide an easy-to-use manual grinder for peppercorns, salt crystals and other grindable products which nevertheless assures excellent grind quality for the product requiring milling.

According to one broad aspect of the invention, these and other objects are achieved by providing an easy-to-use manual grinder for peppercorns, salt crystals and other grindable products the manual grinder comprising a container with a shaft passing therethrough and bearing conical round type grinder plates at its base, said shaft having at its upper end a toothed wheel operatively connected to a rack which is able to slide in an essentially perpendicular direction to the axis of the shaft.

Other characteristics are explained in the following description and with reference to the subsequent claims.

The characteristics and advantages of an easy-to-use manual grinder for peppercorns, salt crystals and other grindable products according to the invention will become clearer in the following description, which is given by way of nonlimiting examples only, and with reference to the accompanying drawings, in which:
Figure 1 is a longitudinal cross-sectional elevation of a manual grinder according to the invention;
Figure 2 is a second lengthwise cross-section of the manual grinder shown in Figure 1;
Figure 3 is an axonometric exploded view of the grinder in Figure 1, viewed from above;
Figure 4 is an axonometric exploded view of the grinder in Figure 1, viewed from below;
Figures 5 and 6 are perspective views illustrating the handle movement and further illustrating a second embodiment of a manual grinder according to the present invention;
Figure 7 is a longitudinal cross-sectional elevation view of the second embodiment of the invention;
Figure 8 is an exploded perspective view of a toothed rack, toothed gear wheel and return spring which combine with a longitudinally extending shaft and the handle to form the operating mechanism according to the second embodiment of the invention;
Figure 9 and 10 are perspective top views with the top cover removed of the second embodiment of the invention showing the handle movement;
Figure 10 is an exploded view of the manual grinder according to the second embodiment;
Figure 11 is an inverted view of the grinder showing adjustment mechanism for the grinder plates of the second embodiment; and
Figure 12 is a view similar to Figure 11 but with the lower cover of the adjustment mechanism remove.

In the following description of an easy-to-use manual grinder for peppercorns, salt crystals and other grindable materials, indicated in its complete form by the number 10, reference will be made to the drawings. The so called grinder is of a construction whereby it can be used in one handle and the operating mechanism achieves a milling action.

In the embodiments illustrated, the grinder 10 consists of a container 12, essentially tubular in shape, suitable for containing the grindable products referred to above. As shown, the tubular container is configured to be aesthetically pleasing and ergonomically shaped.

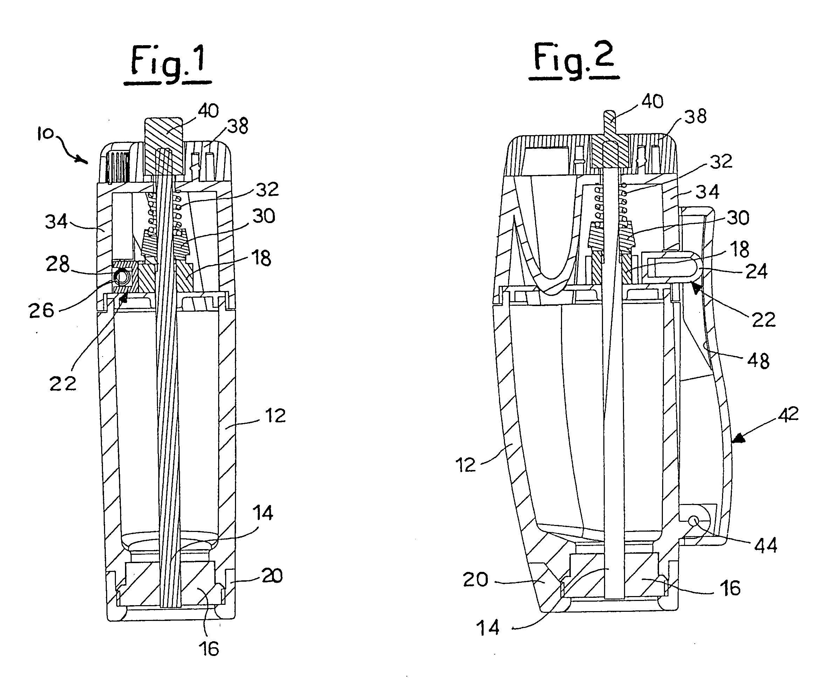

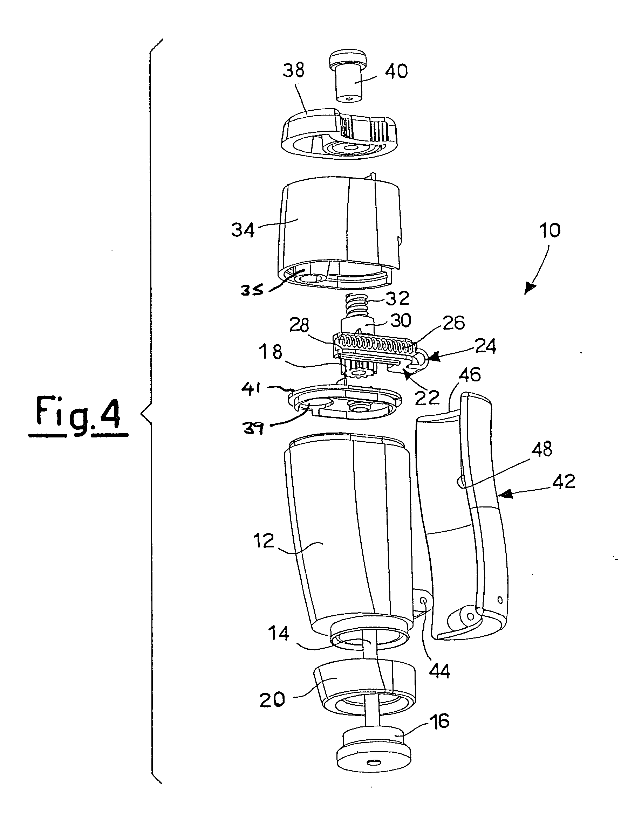

Passing through the centre of the container 12 in the embodiment of Figures 1 to 4 is a shaft 14 having conical round grinder plates (shown schematically at 16) at its lower end and a toothed wheel 18 at its upper end. As known to those skilled in the art, there will be two plates moveable relative to one another.

The grinder plates 16 are located in the vicinity of base 20. The base 20 is open at the bottom and connected to the lower end of the container 12.

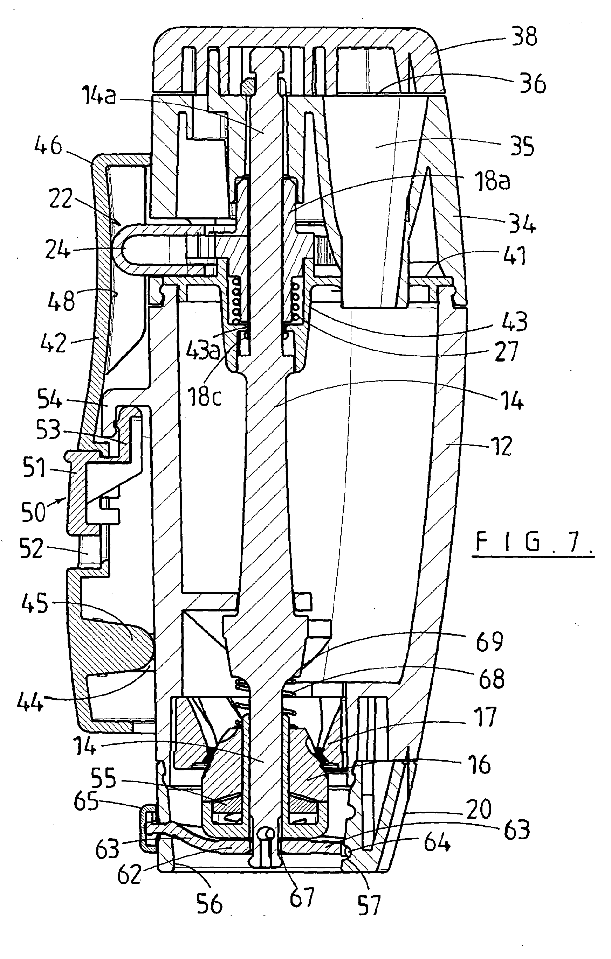

The toothed wheel 18 meshes with a toothed rack 22. The rack 22 is mounted to slide in a direction essentially perpendicular to the axis of the shaft 14. At one end of the rack 22 is a bearing element 24. When in its "release" position (which corresponds to that shown in Figure 6) the bearing element 24 juts out beyond the side of container 12 due to the action of a return spring 26. The spring 26 may, for example, be provided in a longitudinal slot 28 in the rack 22.

Above the toothed wheel 18 is a catch 30. The lower teeth 31 of the catch 30 mesh with upper teeth 19 of the toothed wheel 18. The catch 30 is pushed against the toothed wheel 18 by means of a spring 32 located above the catch 30.

The gearing, comprising the toothed wheel 18 and the rack 22, and the catch 30 are enclosed in an upper casing 34 connected to the top end of the container 12. This upper casing 34 has an opening 36 at the top where the grindable products can be loaded. This opening 36 can be closed using a lid 38, which may for example be rotated around a bolt 40 provided on an axis parallel to the axis of the shaft 14.

Extending from opening 36 is a chute 35. The lower end of the chute 35 locates in an opening 37 in cover 41. The cover 41 locates between the upper end of container 12 and the lower end of the upper casing 34.

On the exterior of the container 12 is a hinged operating lever 42. Hinge section 44 is provided at the lower end of the container 12. A hinge section 45 projecting from the inside wall surface of handle 42 is pivotally coupled to hinge section 44.

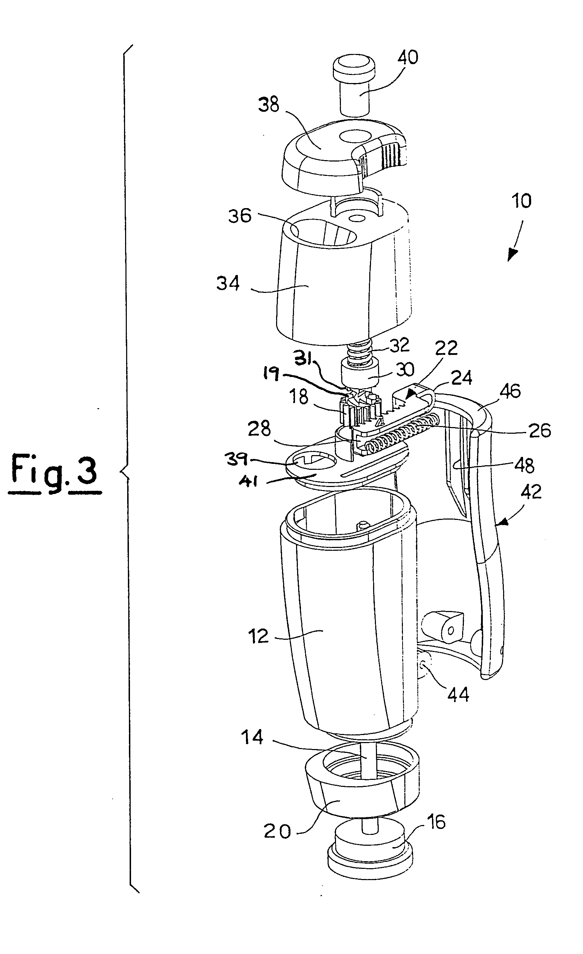

The bearing element 24 of the rack 22 is engaged with the upper end 46 of the operating lever 42. Figure 3 shows how the bearing element 24 fits into a longitudinal cavity 48 provided on the upper inner surface of the lever 42. Thus when the lever 42 is operated it cyclically moves the rack 22 back and forth in a direction transverse to the axis of shaft 14.

The operation of the manual grinder according to the invention will be clear from the above description with reference to the drawings, and from the following description.

The peppercorns, salt crystals and other grindable products are introduced through the opening 36 in the upper casing 34. The grindable products fall by gravity through chute 35 into the container 12. The container 12 is preferably of a transparent material so that the user can see how full it is.

The container 12 and the operating lever 42 are of a size such that they can be picked up by the user in one hand. The user, by contracting his/her hand, moves the operating lever 42 from the aforementioned (Figure 6) "release" position to a position (see Figure 2) where it can move no further. As a result the rack 22 is pushed by lever 42 in a direction substantially perpendicular to the axis of the shaft 14.

The coupling of the rack 22 and the toothed wheel 18 of the shaft 14 produces a rotation of the shaft 14, which causes relative movement of the grinder plates 16. In this phase, the catch 30 is pushed upwards by the upper teeth 19 of the toothed wheel 18. The return spring 26, which is compressed in this initial phase, then returns the operating lever 42 to its initial or release position by the motion of the rack 22, obviously after the user has relaxed his or her hand.

In this second release phase the lower teeth 31 of the catch 30 are pushed by the spring 32 against the upper teeth 19 of the toothed wheel 18. The toothed wheel 18 is thus held in the position it reached in the initial phase, while the rack 22 returns to the release position. Consequently as the lever 42 moves back to its release the toothed wheel 18 is not rotated and hence neither is the shaft 14. The grinding plates 16 therefore do not move relative to one another.

Repeating these two phases, the user rotates the shaft 14 and thus the grinder plates 16 in one direction of rotation with a series of rotations and pauses by means of the contraction and relaxation of his hand.

It should be noted that the shape of the lower teeth 31 of the catch 30 and the upper teeth 19 of the toothed wheel 18 is known in the art. Specifically, they have straight teeth on one side and inclined teeth on the other, so as to allow the rotation of the toothed wheel 18 in one direction only.

It is also possible to adjust the working height of the shaft 14 of the grinder plates 16 to adjust the particle size. For example, if the shaft 14 has a nut 40 at its upper end, this can be achieved by moving the nut 40 axially in relation to the top of the lid 38.

The characteristics and advantages of the easy-to-use manual grinder for peppercorns, salt crystals and other grindable products of this invention will be clear from the above description. These include:
- an operational mode which achieves a milling action;
- simple to use, requiring only one hand;
- excellent grind quality;
- reliable operation;
- ability to refill the container 12 without the need for any disassembly of the grinder.

It will be evident to those skilled in the art that the easy-to-use manual grinder for peppercorns, salt crystals and other grindable products designed in this way lends itself to numerous modifications and variants, all of which would be included within the scope of this invention. Furthermore, the specific details indicated could be substituted with technically equivalent elements. In practice, the materials used and the shape and dimensions of the grinder could be of any form as required by the technical considerations.

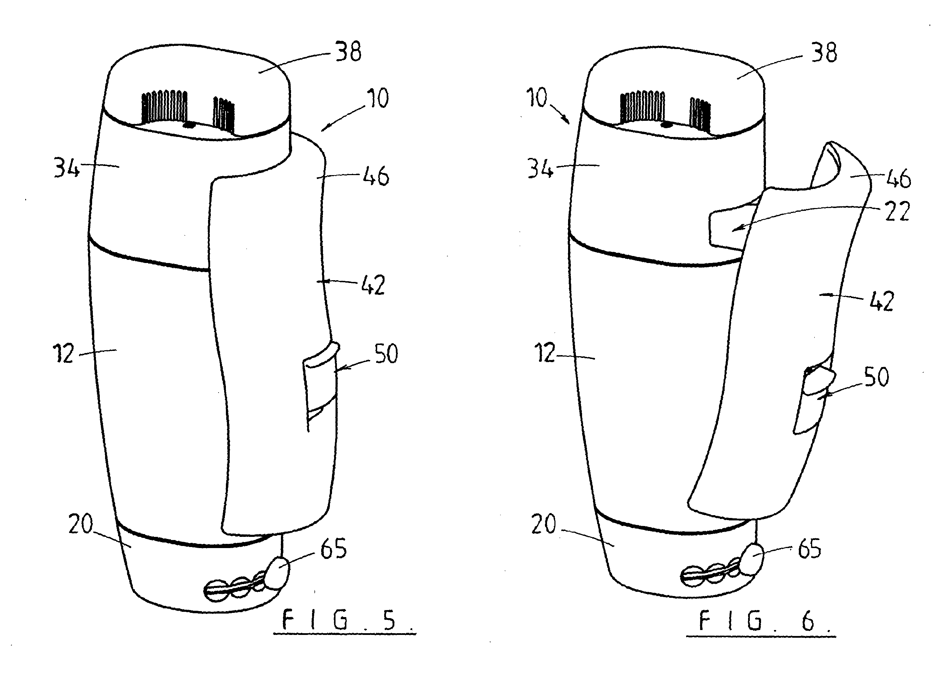

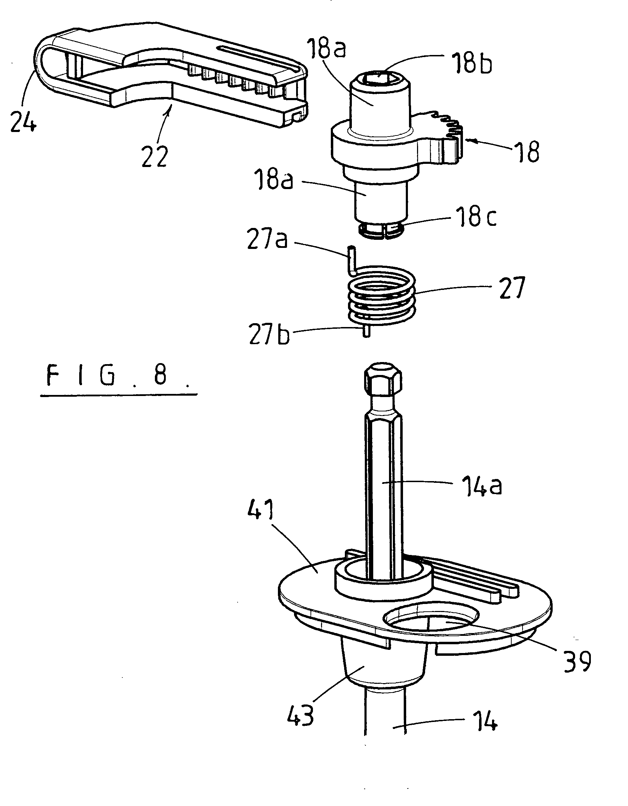

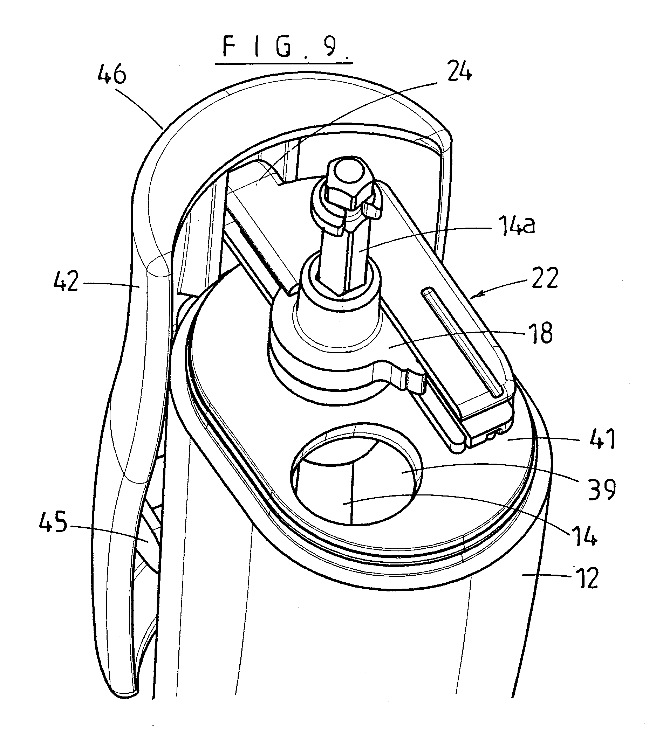

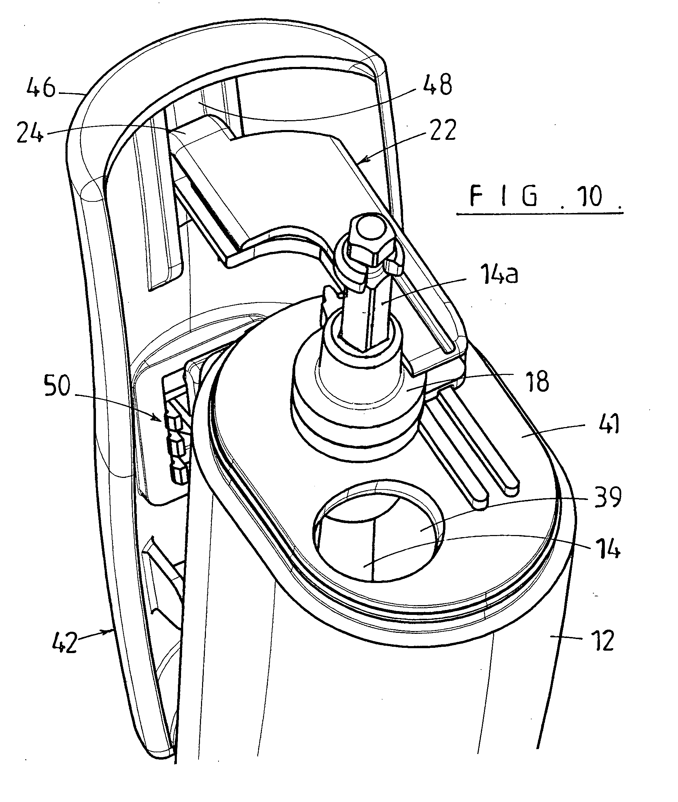

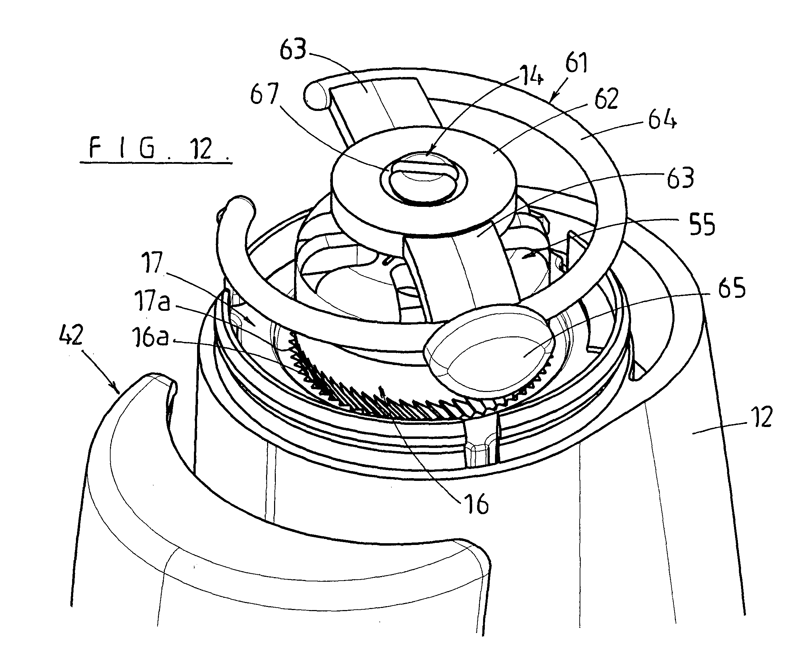

For example, modifications and variants are apparent from the second embodiment of the invention as shown in Figures 5-12. One such modification is the incorporation of a latch mechanism 50 with the handle 42. The purpose of the latch mechanism 50 is to hold the handle 42 in its "closed" position (see Figure 7) when the manual grinder is not being used. This renders the pepper grinder more compact in its non-use position.

The latch mechanism 50 can comprise a sliding button 51 mounted in a recess 52 in the handle 42. Extending from the button 51 is an L-shaped latch member 53, the distal end of which can engage behind a substantially "L" shaped projection 54 extending from the wall of container 12.

In Figure 7 the latch mechanism 50 is shown in the latched position. When a person desires to use the manual grinder it is simply a matter of sliding button 51 downwardly so as to release latch element 53 from the L-shaped projection 54. This action releases the handle to move to its previously described "release" position under the action of the bias spring acting on rack 22.

It will be appreciated by those skilled in the art that the latch mechanism, while shown in the second embodiment, can also be incorporated in the first embodiment.

According to a further modification of the manual grinder, and referring more particular to Figure 7, the conical round shaped moveable grinder element 16 co-operates with a fixed grinder element 17 located at the lower end of the container 12. The fixed grinder element 17 has a tapering throat 19 into which grindable product loaded into the container 12 can engage. Unlike the previously described arrangement a ratchet mechanism 55 is provided at the location of the grinder elements 16 and 17.

To this end the shaft 14, grinder elements 16 and 17 and ratchet 55, can be of the type sold under the CrushGrind brand of Ideas A/S of Copenhagen, Denmark. The inclusion of the ratchet mechanism 55 with the grinding elements 16 and 17 enables the shaft 14 to apply a movement to the first grinding element 16 when the handle 42 is squeezed toward the body 12. However, upon the handle 42 being released the shaft 14 rotates in the opposite direction and no driving effect is applied to the grinding element 16. As a consequent the first grinding element 16 is always moved relative to the second grinding element 17 in the same direction of rotation.

In view of the ratchet element being located at the lower end of the grinder 10 a simplified drive train in casing 34 can be used. Therefore, as shown in Figure 7, the drive train comprises the rack 22, toothed wheel 18 and a tension spring 27. The spring 27 is located within a well 43 in the cover 41. One leg 27a of the tension spring 27 engages in a hole in the toothed wheel 18 whereas the leg 27b at the other end of the spring 27 engages in an opening in the floor of well 43. Consequently, spring 27 applies a torque to the toothed wheel 18 such that the toothed wheel 18 tends to rotate under the action of the spring 27 to force the rack 22 to its release position (i.e. the position in Figure 6).

Projecting either side of the toothed wheel 18 are tubular extensions 18a. The bore 18b which extends therethrough is angular in cross-section and is commensurate with the cross-sectional shape of the upper end 14a of the shaft 14.

Projecting from the lower end of the lower tubular extension 18a is a split rim 18c which snap locks into an opening 43a in the floor of the well 43. Thus with the spring 27 engaged on the lower tubular projection 18a and leg 27a engaged in the hole in the toothed wheel the assembly can be installed on the end 14a of shaft 14 to engage in the well 43 and become snapped locked therein by virtue of the split rim 18c snap locking into the hole 43a in the floor of the well 43.

In a preferred form of the invention the cover 41 also is arranged to snap lock onto the lower end of the chute 35. This results in the drive mechanism formed by rack 22, toothed wheel 18 and the spring 27 becoming retained in position within an enclosed area formed by casing 34 and cover 41. This essentially becomes a sealed unit thereby making it easier for cleaning of the grinder. Thus cleaning fluid e.g. water, soapy water etc. can flow through the chute 35 into the container 12 and exit from the bottom thereof without coming into contact with the operating mechanism.

In a preferred form of the invention it is proposed that the shaft 14 be formed of a plastic material thereby avoiding corrosion problems. All other components of the grinder can be formed of a non metallic material.

According to the arrangement shown in Figures 7 and 10-12 an adjustment mechanism is provided at the lower end of the grinder 10 so that the position of the moveable grinding element 16 relative to the fixed grinding element 17 can be altered. The mechanism, as illustrated, is the subject of our New Zealand patent specification 527450, the content of which is hereby incorporated by way of specific reference.

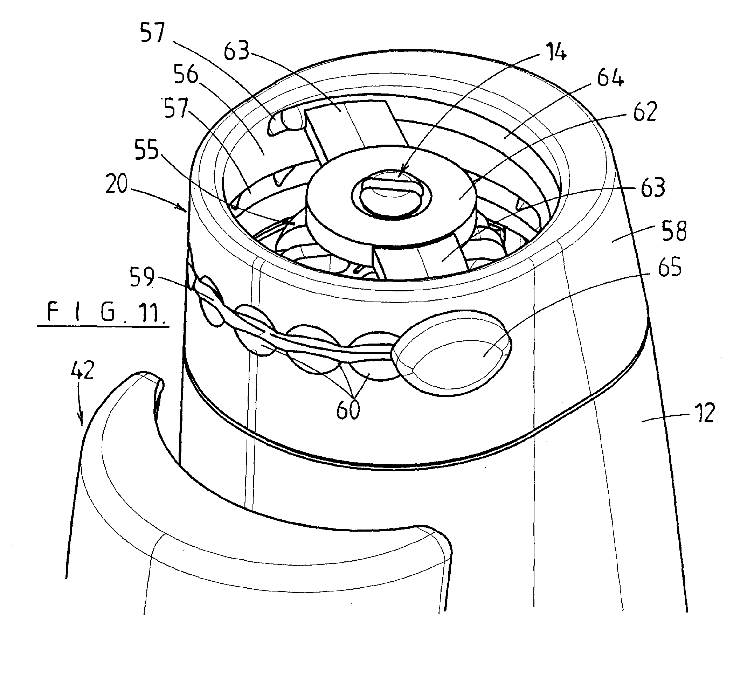

As described in New Zealand patent specification 527450 the inner wall 56 of cover 20 is provided with a helical shaped groove 57. In the outer wall 58 of the cover 20 is formed a slot 59 which extends partially around the periphery thereof. Slot 59 also has a helical form commensurate with and opens into the groove 57. As can be seen more clearly in Figure 11 a series of indentations 60 are formed in the wall 58 along the length of the slot 59.

A helical connector element 61 locates in end cover 20. The connector 61 comprises a hub 62 from which radiates a pair of spokes 63, these spokes being coupled to a rim 64 which extends in a helical manner the same as the helical groove 57 within the end cover 20.

Extending from the rim 64 is a spigot with a knob 65 arranged on the distal end thereof. An opening 67 in the hub 62 enables the hub to be engaged over the lower end of the shaft 14.

The connector element 61 is assembled into the end cap 20 so that the rim 64 slidingly engages in the helical groove 57. The spigot engages through the slot 59 and knob 65 is fitted thereto. With the end cap 20 fixed to the end of the body 12 the end of the shaft 14 extends through opening 67 in hub 62.

A spring 68 is engaged between the first grinding element 16 and a shoulder 69 of the shaft 14. The spring 68 biases the grinding element 16 to move axially away from the shoulder 69. The extent to which the first grinding element 16 will be biased i.e. moved away from the shoulder 69 is controlled by engagement of the hub 62 against the first grinding element 16.

By moving the knob 65 (and hence the spigot) along slot 59 the position of the hub 62 relative to the longitudinal length of the shaft 14 can be adjusted. This is due to the helical groove 57 and helical form connector 61 causing the hub 62 to be displaced axially relative to the axis of shaft 14. Thus by moving the knob 65 to different positions along slot 59 (where the knob 65 will engage in a selected recess 60) the distance between the grinding surfaces 16a and 17a of the grinding elements 16 and 17 can be increased or lessened.

The adjustment mechanism thus provides a simple and effective means of altering the grind between extremes of "fine" and "course".

## Claims

1. An easy-to-use manual grinder for peppercorns, salt crystals and other grindable products of the type comprising a container (12) with a shaft (14) passing therethrough and bearing conical round type grinder plates (16) at its base, **characterized in that** said shaft (14) has at its upper end a toothed wheel (18) operatively connected to a rack (22) which is able to slide in an essentially perpendicular direction to the axis of the shaft (14).

2. Manual grinder as claimed in Claim 1, wherein said rack (22) is biased to a release position by a return spring (26 or 27).

3. Manual grinder as claimed in Claim 1 or 2, wherein a bearing element (24) is provided at one end of said rack (22), said bearing element (24) in the release position of the rack (22) jutting out beyond the side of said container (12).

4. Manual grinder as claimed in any one of Claims 1 to 3, wherein said toothed wheel (18) and said rack (22) are contained inside an upper casing (34) which is connected to an upper end of said container (12).

5. Manual grinder as claimed in Claim 4, wherein said upper casing (34) has an opening (36) at its top via which the grindable products can be introduced into said container (12).

6. Manual grinder as claimed in claim 5 wherein the opening (36) in the upper casing (34) is connected to a chute (35) which extends through an opening (39) in a partition (41) which separates the toothed wheel (18) and rack (22) from the part of the container (12) in which grindable product is located.

7. Manual grinder as claimed in Claim 5 or 6, further including a lid (38) moveable to close and open the opening (36) in the upper casing (34).

8. Manual grinder as claimed in Claim 3, wherein hinged by a hinge (44) on the exterior of said container (12) is an operating lever (42) for said rack (22).

9. Manual grinder as claimed in Claim 8, wherein said bearing element (24) fits into a longitudinal cavity (48) provided on an upper inner part of said operating lever (42) during operation of said lever.

10. Manual grinder as claimed in any one of Claims 1 to 9, wherein said grinder plates (16) are located in a base (20) which is open at the bottom and connected to the bottom of said container (12).

11. Manual grinder as claimed in claim 8 or 9 further including a latch mechanism (50) operable to selectively retain the handle (42) in a non-operative position.

12. Manual grinder as claimed in claim 11 wherein the latch mechanism (50) includes a button (51) slidingly engaged with the handle (42), the button (51) having a latch element (53) which is engageable with an abutment (54) on the container (12).

13. Manual grinder as claimed in any one of claim 1 to 12 wherein one of the grinder plates (16) is coupled to the shaft (14) by a ratchet mechanism (55).
